# DEMANDE DE BREVET EUROPEEN

(11) **EP 0 755 623 A1**
(43) Date de publication de la demande: **29.01.1997**
(21) Numéro de dépôt: 96401629.9
(22) Date de dépôt: 22.07.1996
(51) Int. Cl.: A01J 9/04

(54) **Refroidisseur de lait à couvercle et agitateur**

(30) Priorité: 25.07.1995 FR 9508997
(71) Demandeur: PROMINOX S.A., 58000 Nevers (FR)
(72) Inventeur: Janocha, Lars, 58000 Marzy (FR)
(74) Mandataire: Lefebure, Gérard

(57) **Abrégé**

L'invention concerne un refroidisseur de lait à couvercle et agitateur. Il comprend une cuve cylindrique (1) en position verticale, à fond incliné (2) vers un orifice de vidange (3), équipé d'un couvercle (4) relié au corps de la cuve par une articulation (5) située du côté le moins profond de la cuve, d'un dispositif d'agitation constitué d'un arbre (6) et d'une pale (7), l'arbre (6) traversant ledit couvercle et supportant un motoréducteur extérieur (8). Ledit arbre est disposé dans la cuve (1) sensiblement à l'opposé de l'articulation et est, lorsque le couvercle est fermé, perpendiculaire au fond incliné. Il traverse en outre le couvercle dans une fente oblongue (9) et est relié à un organe de rappel (10) par un moyen de liaison (11) qui, à l'ouverture du couvercle, le ramène dans une position sensiblement verticale.

## Description

La présente invention concerne un refroidisseur de lait à couvercle et agitateur, du type dit "à la ferme".

La collecte de lait dans les fermes se fait par tournées de camions-citernes dont la périodicité dépend de l'importance du lait recueilli à chaque traite. Le lait d'une ou de deux traites, ou même plus, doit être refroidi et conservé sous agitation.

On utilise à cet effet comme refroidisseurs de lait dits "a la ferme" des cuves cylindriques en position verticale munies d'un couvercle supérieur permettant l'accès à la cuve pour son nettoyage manuel ou son inspection technique. Le fond de la cuve est incliné afin de faciliter l'écoulement du lait par un orifice de vidange situé dans la partie la plus basse. Un dispositif d'agitation constitué d'un arbre terminé par une pale est mis en rotation par un motoréducteur extérieur à la cuve.

Il existe à l'heure actuelle deux types de refroidisseurs de lait :
- Dans le premier cas, l'articulation entre le couvercle et la cuve est diamétralement opposée à l'orifice de vidange, c'est-à-dire du côté correspondant à la moitié la moins profonde de la cuve. Dans la suite de la description, pour des raisons de simplification, la moitié la plus profonde de la cuve, contenant l'orifice de vidange sera appelée partie avant de la cuve et la moitié la moins profonde de la cuve, contenant l'articulation, sera appelée partie arrière de la cuve.

Par conséquent, l'accès à ce premier type de cuve pour son ouverture et son nettoyage, et l'accès à l'orifice de vidange, se font dans la partie avant qui peut à la limite constituer la seule zone d'accès facile à la cuve. L'inconvénient de cette cuve est que, pour pouvoir ouvrir le couvercle sans que la pale ne heurte la paroi de la cuve, l'agitateur doit être placé dans la partie arrière. De ce fait, lorsque le niveau de lait est faible dans la cuve, la quantité de lait présente dans la partie la plus profonde de la cuve ne peut pas être bien agitée.
- Dans le deuxième cas, l'articulation entre le couvercle et la cuve est située au dessus de l'orifice de vidange et l'agitateur est placé dans la partie avant de la cuve. Mais il faut alors dégager des zones d'accès importantes tout autour de la cuve, en particulier pour le nettoyage de la partie la plus profonde, sauf si la personne qui ouvre le couvercle, l'ouvre en le relevant vers elle, ce qui n'est pas très pratique et est contraire au comportement instinctif. Ce type de refroidisseur n'est pas très bien accepté par les utilisateurs.

La présente invention a donc essentiellement pour but de remédier aux inconvénients susmentionnés des refroidisseurs de lait à couvercle et agitateur, de type connu.

A cet effet, le refroidisseur de lait selon l'invention est du type consistant en une cuve cylindrique en position verticale, à fond incliné vers un orifice de vidange, équipé d'un couvercle relié au corps de la cuve par une articulation située du côté le moins profond de la cuve, ledit refroidisseur étant en outre équipé d'un dispositif d'agitation constitué d'un arbre et d'une pale, l'arbre du dispositif d'agitation traversant ledit couvercle et supportant un motoréducteur extérieur à la cuve, caractérisé en ce que l'arbre est disposé sensiblement à l'opposé de l'articulation entre la cuve et le couvercle et est, lorsque le couvercle est fermé, perpendiculaire au fond incliné, l'arbre traverse le couvercle dans une fente oblongue et est relié à un organe de rappel par un moyen de liaison qui, à l'ouverture du couvercle, le ramène dans une position sensiblement verticale.

De cette façon, la pale de l'agitateur est située dans la partie la plus profonde de la cuve et agite même un faible niveau de lait, tandis qu'à l'ouverture du couvercle, l'arbre est ramené en position verticale, ce qui permet au dispositif d'agitation de sortir de la cuve sans heurter la paroi intérieure de celle-ci avec la pale.

D'autres caractéristiques et avantages de la présente invention ressortiront mieux au cours de la description qui va suivre d'un mode de réalisation préféré de l'invention donné à titre d'exemple, en référence aux dessins annexés sur lesquels:
- la figure 1 est une vue en coupe axiale du refroidisseur de lait selon l'invention;
- la figure 2 est une vue de dessus de la figure 1;
- la figure 3 est une vue de détail de la figure 1 représentant la décomposition du mouvement du dispositif d'agitation du refroidisseur lors de l'ouverture du couvercle,
- la figure 4 est une vue de détail agrandie représentant le débattement du dispositif d'agitation.

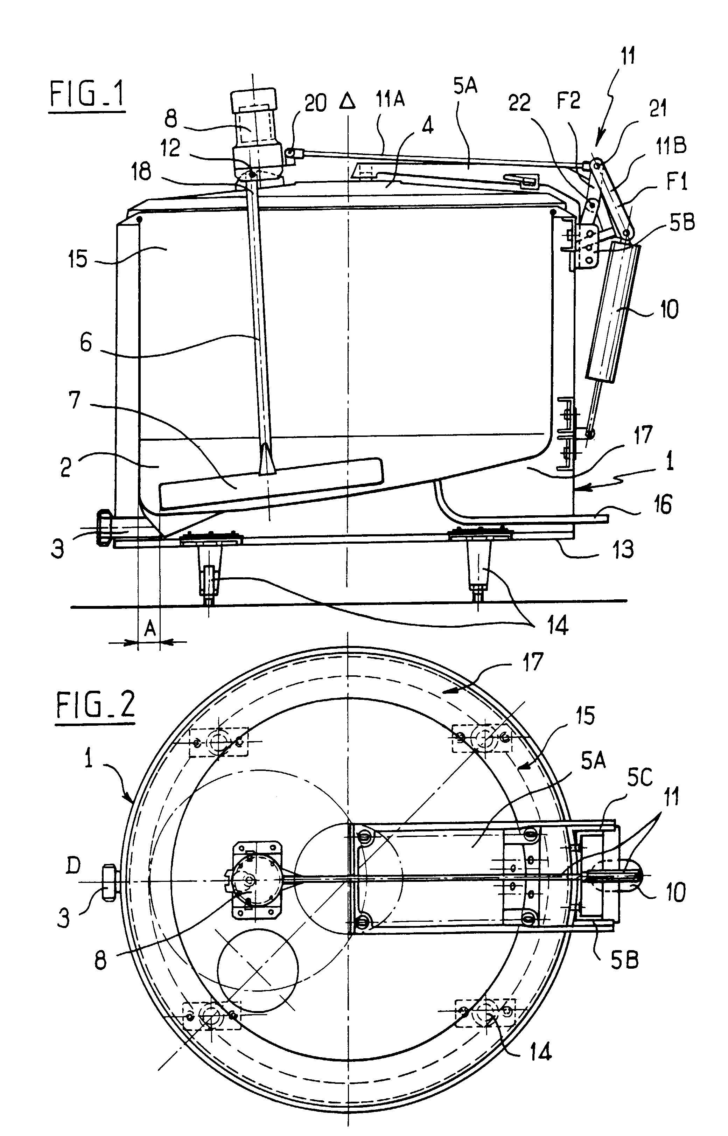

Comme on peut le voir sur la figure 1, le refroidisseur comprend une cuve extérieure 1 qui se présente sous la forme d'une enveloppe cylindrique à paroi verticale, laquelle est munie d'une plaque de fond 13 supportée par des pieds à vis réglables 14, par exemple au nombre de quatre. La cuve extérieure 1 comporte une cuve intérieure 15, également à paroi verticale, qui présente un fond incliné 2, la zone la plus profonde de la cuve intérieure 15 étant située dans la partie avant du refroidisseur et la zone la moins profonde de la cuve intérieure 15 étant située dans la partie arrière du refroidisseur du côté de l'articulation 5 entre le couvercle 4 et la cuve 1. Un évaporateur de type intégré, est composé par le fond incliné 2, et une autre plaque de tôle délimitant une enceinte en communication avec une tuyauterie l6 et dans laquelle circule un fluide frigorigène.

Une zone libre 17, prévue entre la cuve extérieure 1 et la cuve intérieure 15 à fond incliné, contient une matière isolante constituée de préférence de polyuréthanne. Au niveau de son point le plus bas, le fond est relié à une conduite de vidange dont l'orifice 3 débouche en dehors de la cuve extérieure 1. Le fait d'avoir adopté un fond incliné a pour avantage un écoulement régulier et total du lait vers l'orifice de vidange.

La cuve extérieure 1 est complétée par le couvercle supérieur 4 relié par l'articulation 5 au corps de ladite cuve 1. Comme on peut le voir sur la figure 1 et la figure 2, l'articulation 5 est constituée d'un élément de support ayant la forme d'un bras 5A, d'une forme sensiblement rectangulaire, dont les quatre coins sont vissés sur une zone radiale du couvercle 4 située du côté correspondant à la partie arrière de la cuve, l'extrémité périphérique arrondie dudit bras pivotant entre deux attaches 5B, 5C fixées, par exemple par vissage, sur le côté supérieur de la cuve 1.

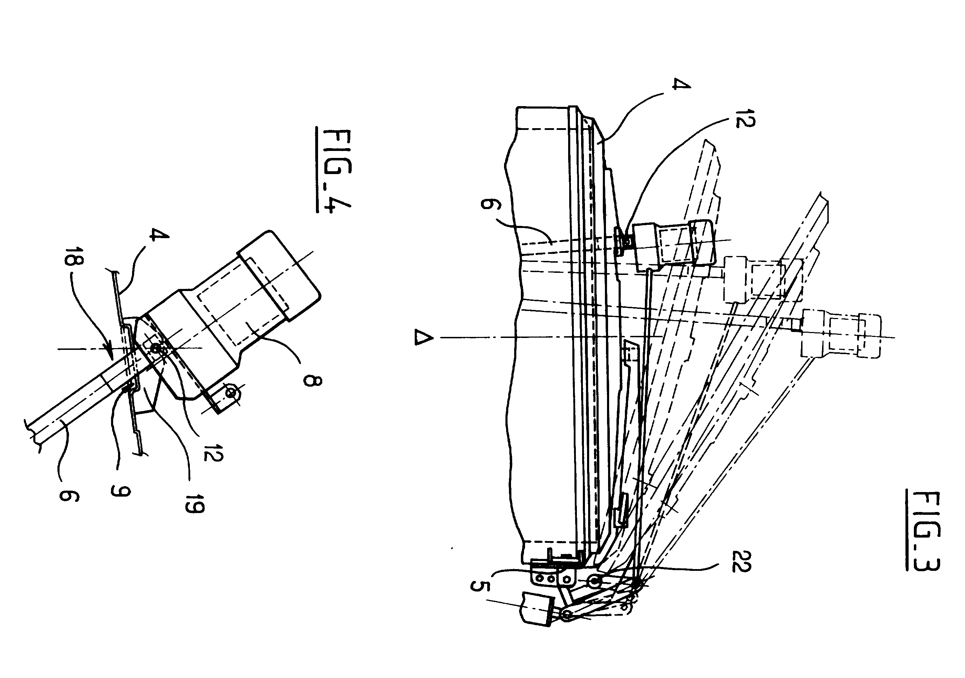

Ledit couvercle a donc la possibilité de basculer vers le haut, comme cela est représenté sur la figure 3, en vue notamment d'un nettoyage manuel ou d'une inspection technique de la cuve.

Dans la cuve intérieure 15 représentée sur la figure 1, est prévu le dispositif d'agitation de type connu, comprenant un arbre 6 se terminant par une pale 7 qui est fixée, au niveau de sa partie médiane, perpendiculairement audit arbre. Un espace suffisant est laissé entre cette pale 7 et le fond incliné 2 pour permettre une circulation convenable du lait.

L'arbre à est solidaire du couvercle 4 du fait qu'il le traverse par l'intermédiaire d'un trou 18 pratiqué légèrement en biais dans ledit couvercle, au niveau de la partie avant de la cuve 1. L'emplacement dudit trou 18 est sensiblement opposé à l'articulation 5, environ aux trois-quarts du diamètre de la cuve 1, à partir de l'articulation. L'extrémité libre de l'arbre 6 est accouplée à un arbre moteur appartenant au motoréducteur électrique 8. Ledit motoréducteur permet de manière connue d'entraîner en rotation le dispositif d'agitation.

Lorsque le couvercle 4 est fermé, l'arbre à est perpendiculaire au fond incliné 2 de la cuve intérieure 15.

L'agencement et la conception relatifs à l'arbre à et à la pale 7 sont adaptés pour que, en position de fonctionnement, l'une des extrémités de la pale 7 du dispositif d'agitation soit placée à une distance proche de l'orifice de vidange 3. Ainsi, l'écart A entre l'extrémité de la pale 7 orientée vers l'orifice de vidange 3 et la paroi verticale de la cuve intérieure 15 située au dessus de l'embouchure de la conduite de vidange, est déterminé pour avoir la valeur minimale considérée comme acceptable pour le bon fonctionnement du refroidisseur. Une agitation du lait à très faible volume peut alors avoir lieu du fait que la pale 7 est susceptible d'atteindre et d'agiter le lait situé au niveau le plus bas du refroidisseur, le but recherché étant un refroidissement homogène du lait.

Comme on peut mieux le voir sur la figure 4, le dispositif d'agitation 6, 7 et le motoréducteur 8 sont reliés de manière à former un ensemble d'agitation, la liaison entre le dispositif d'agitation 6, 7 et le motoréducteur 8 constituant un axe de pivotement 12, lequel est fixé à un support 19 agencé au dessus dudit trou 18, entre la surface supérieure du couvercle 4 et le motoréducteur 8. La partie diamétrale du trou 18 qui se trouve dans l'axe diamétral D (voir figure 2) passant par l'orifice de vidange 3 et l'articulation 5, est élargie de chaque côté pour constituer une fente oblongue 9. Cette dernière constitue une fente de déplacement pour l'arbre 6, lorsque l'ensemble d'agitation est amené à pivoter par rapport à l'axe 12 au moment de l'ouverture du couvercle 4. L'ensemble d'agitation 6, 7, 8 se déplace dans la fente 9 grâce à un système mécanique articulé, relié à la cuve 1 et actionné lors de l'ouverture du couvercle 4. Ce système est conçu principalement pour éloigner la pale 7 de la paroi verticale de la cuve intérieure 15, lorsque l'opérateur bascule le couvercle vers le haut, dans le but d'éviter une collision de ladite pale avec ladite paroi verticale et donc un endommagement sérieux du refroidisseur.

A cet effet, ledit système mécanique articulé, représenté sur la figure 1, se compose d'un moyen de liaison 11, constitué d'une tringle 11A et d'une attache articulée 11B en deux parties, et d'un organe de rappel 10, constitué, par exemple, d'un vérin. Dans une autre variante de la présente invention, on pourra utiliser un ressort à la place du vérin. La tringle 11A qui sert de liaison entre l'ensemble d'agitation 6, 7, 8 et le vérin 10 se présente sous la forme d'une tige plus longue que le bras de support 5A, disposée au dessus dudit bras, dans l'axe de celui-ci. Une première extrémité de la tringle est reliée à la base du motoréducteur 8 par une attache 20. La deuxième extrémité de la tringle est reliée au niveau de la jonction 21 entre les deux ferrures F1, F2 qui constituent l'attache 11B en deux parties. L'extrémité libre de la ferrure F1 est reliée à la partie supérieure du vérin 10 et l'extrémité libre de la ferrure F2 est fixée au niveau de l'articulation 5 entre le couvercle et la cuve. La tige du vérin 10 est reliée quant à elle, par attache, sur la paroi verticale de la cuve extérieure 1, à hauteur de l'évaporateur. La ferrure F2 est pourvue en son milieu, d'une articulation 22 qui définit le point de rotation du système mécanique - tringle 11A, attache 11B et vérin 10 - lors de l'ouverture du couvercle.

Comme on peut le voir plus particulièrement sur la figure 3, lorsque l'opérateur ouvre le couvercle 4 qui pivote du fait de l'articulation 5, la force du basculement entraîne, de manière naturelle, l'arbre 6 du dispositif d'agitation à pivoter par rapport à l'axe 12, en direction de l'orifice de vidange 3, avec un débattement limité par la taille de la fente 9. Sous l'effet de pivotement du couvercle 4, la ferrure F2, dont une extrémité est solidaire de l'articulation 5, pivote également, ce qui entraîne le système mécanique - tringle 11A, attache 11B et vérin 10 - à pivoter par rapport au point de rotation 22, dans le sens de l'ouverture du couvercle 4. Le système mécanique suit donc le mouvement du couvercle, la tringle 11A restant toujours dans l'axe du bras de support 5A. L'extrémité de la ferrure F2 reliée en 21 suit une trajectoire sensiblement en arc de cercle, le centre de ce cercle étant le point 22. La ferrure F1, qui pivote dans le sens de l'ouverture du couvercle 4, vient exercer une pression sur le vérin 10. L'énergie développée lors de la course du vérin est transmise à l'ensemble d'agitation par l'intermédiaire de la tringle 11A. Sous l'action de la force de rappel engendrée par le vérin 10, l'arbre 6 du dispositif d'agitation pivote par rapport à l'axe 12, cette fois dans le sens opposé à l'orifice de vidange 3 et la paroi verticale de la cuve intérieure 15, l'amplitude de son mouvement étant limitée par la taille de la fente 9. Par conséquent, la pale 7 ne peut pas non plus heurter la paroi verticale de la cuve intérieure 15, côté articulation. A mi-ouverture du couvercle, l'arbre 6 atteint une position sensiblement verticale.

De par l'agencement astucieux de l'articulation à l'opposé de l'orifice de vidange, le choix et la disposition du système articulé - tringle, attache en deux parties, vérin - de faible encombrement, la position de fonctionnement idéale du dispositif d'agitation, l'invention fournit un refroidisseur de lait qui permet une ouverture commode du couvercle par l'opérateur sans risque de collision entre la pale et la paroi verticale de la cuve intérieure, un accès facile au fond de la cuve en vue de son inspection technique ou de son nettoyage, et une agitation du lait même en très faible quantité.

Il va de soi que la forme de réalisation du refroidisseur de lait qui a été décrite ci-dessus a été donnée à titre purement indicatif et nullement limitatif, et que de nombreuses modifications peuvent être facilement apportées par l'homme de l'art sans pour autant sortir du cadre de l'invention.

## Revendications

1. Refroidisseur de lait du type consistant en une cuve cylindrique (1) en position verticale, à fond incliné (2) vers un orifice de vidange (3), équipé d'un couvercle (4) relié au corps de la cuve par une articulation (5) située du côté le moins profond de la cuve, ledit refroidisseur étant en outre équipé d'un dispositif d'agitation constitué d'un arbre (6) et d'une pale (7), l'arbre (6) du dispositif d'agitation traversant ledit couvercle (4) et supportant un motoréducteur (8) extérieur à ladite cuve, caractérisé en ce que l'arbre (6) est disposé sensiblement à l'opposé de l'articulation (5) entre la cuve (1) et le couvercle (4) et est, lorsque le couvercle (4) est fermé, perpendiculaire au fond incliné (2), l'arbre (6) traverse le couvercle dans une fente oblongue (9) et est relié à un organe de rappel (10) par un moyen de liaison (11) qui, à l'ouverture du couvercle (4), le ramène dans une position sensiblement verticale.

2. Refroidisseur de lait selon la revendication 1, caractérisé en ce qu'en position de fonctionnement, l'une des extrémités de la pale (7) du dispositif d'agitation est placée à une distance proche de l'orifice de vidange (3).

3. Refroidisseur de lait selon la revendication 1 ou 2, caractérisé en ce que le dispositif d'agitation (6, 7) et le motoréducteur (8) sont reliés de manière à former un ensemble d'agitation, la liaison entre le dispositif d'agitation (6, 7) et le motoréducteur (8) constituant un axe de pivotement (12) de sorte que ledit ensemble pivote dans la fente (9) avec un débattement limité, au moment de l'ouverture du couvercle (4).

4. Refroidisseur de lait selon l'une quelconque des revendications 1 à 3, caractérisé en ce que le moyen de liaison entre l'organe de rappel (10) et l'arbre (6) est constitué d'une tringle (11A) et d'une attache (11B) en deux parties.

5. Refroidisseur de lait selon l'une quelconque des revendications 1 à 4, caractérisé en ce que l'organe de rappel (10) est un vérin.

6. Refroidisseur de lait selon l'une quelconque des revendications 1 à 4, caractérisé en ce que l'organe de rappel (10) est un ressort.

7. Refroidisseur de lait selon l'une quelconque des revendications 1 à 6, caractérisé en ce qu'il contient une matière isolante constituée de polyuréthanne.
